# EUROPEAN PATENT SPECIFICATION

(11) **EP 2 866 597 B1**
(45) Date of publication and mention of the grant of the patent: **14.11.2018**
(21) Application number: 13809590.6
(22) Date of filing: 27.06.2013
(51) Int. Cl.: A41D 19/00, D06M 15/693, D06M 15/564, D06M 23/04, D06N 3/00, D06N 3/10, D06N 3/14, B29D 99/00, A41D 19/015, D06M 101/34

(54) **ABRASION AND CUT RESISTANT COATING AND COATED GLOVE**
ABRIEB- UND SCHNITTBESTÄNDIGE BESCHICHTUNG UND BESCHICHTETER HANDSCHUH
GANT DE REVÊTEMENT ET REVÊTU RÉSISTANT AUX ABRASIONS ET AUX COUPURES

(30) Priority: 29.06.2012 US 201261666502 P
(43) Date of publication of application: 06.05.2015
(73) Proprietor: Ansell Healthcare Products LLC, Iselin, New Jersey 08830 (US)
(72) Inventor: PERERA, Manju, Colombo (LK); WEERATHUNGA, Dhammika, Yogiyana (LK); TANTRIGE, Niroshani, Horana (LK); MATHOTA, Amani, Kiribathgoda (LK)
(74) Representative: Zimmermann & Partner Patentanwälte mbB
(86) International application number: PCT/US2013/048158
(87) International publication number: WO 2014/004814

(56) References cited:
- EP-A1- 2 468 122
- US-A1- 2008 032 131
- US-A1- 2008 134 412
- US-A1- 2009 183 296
- US-A1- 2010 186 455
- US-A1- 2010 263 106
- US-A1- 2010 275 342

## Description

### BACKGROUND

### Field of the invention

Embodiments of the present invention generally relate to coatings and gloves and, more particularly, to coatings and coated gloves having improved abrasion- and cut-resistance and fabrication methods thereof.

### Description of the Related Art

Coatings are used in many industries and are of particular use as protectants. Also, gloves are used in many industries, such as construction, industrial, and medical, as well as households, to protect the hands of users from abrasions, impacts, and physical injuries. It is known from US 2008032131 A1 and US 2010275342 A1 to produce cut- and abrasion resistant that gloves using specific fibres such as ultrahigh molecular weight polyethylene, para-aramid or HPF-PVA fibers. Many of such gloves comprise polymeric materials as coatings, such as synthetic or natural latex or other elastomers, such as nitrile butadiene rubber and polychloroprene. And, some gloves, as described in US 2010/263106 have a foamed polymeric coating to impart flexibility and other comfort-related properties. However, although such gloves maintain impervious properties, protecting against germs, viruses, and microbes as well as injuries, such gloves are not particularly abrasion resistant, especially when foamed, leading to breaches during use and particularly during extended use. Moreover, many gloves manufactured with latexes or thermoplastic elastomers are expensive to manufacture and are not durable. Less expensive supported gloves include fabric liners having coatings disposed thereon, which typically provide an EN abrasion resistance of 2 and cut level resistance of 1, such as the gloves presented in EP 2468122 A1. However, none provide a flexible, durable glove having a foamed coating.

Therefore, there is a need for coatings, and coatings for gloves having abrasion and cut resistance and methods of producing such durable coatings and gloves.

### SUMMARY

Abrasion and cut resistant coatings and coated gloves, and methods for manufacturing abrasion and cut resistant, foamed or unfoamed, coatings and coated gloves, substantially as shown in and/or described in connection with at least one of the figures herein, are disclosed as set forth more completely in the claims. Various advantages and features of the present invention will be more fully understood from the following description and drawings.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only illustrative embodiments of this invention and are therefore not to be considered limiting of its scope, for the invention may admit to other equally effective embodiments. It is to be understood that elements and features of one embodiment may be in other embodiments without further recitation. It is further understood that, where possible, identical reference numerals have been used to indicate comparable elements that are common to the figures.
Figure 1 depicts a flow diagram of a method for producing a coating and a coated glove in accordance with one or more embodiments of the invention;
Figure 2 depicts a perspective view of a left-handed, supported palm-dipped glove in accordance with embodiments of the invention; and
Figure 3 depicts a perspective view of a left-handed, unsupported dipped glove in accordance with embodiments of the invention.

### DETAILED DESCRIPTION

Embodiments of the present invention comprise coatings and gloves and methods for making durable coatings and gloves having improved physical properties, and especially abrasion- and cut-resistance properties, while maintaining a very thin and flexible glove for improved dexterity during use. Gloves disclosed herein have vastly improved abrasion resistance, as measured by Taber and Martindale abraders and test protocols, as well as increased cut resistance. For example, latex, polymeric, or elastomeric coatings, as well as coated gloves, made in accordance with embodiments of the invention, are capable of attaining EN level 4 abrasion resistance, while, heretofore, no coating or glove having a thin, flexible elastomeric, polymeric, or latex layer is known to have attained performance beyond EN level 3. Also, gloves in accordance with embodiments of the invention have attained an EN level 2 cut resistance where previous gloves achieved only a cut resistance of EN level 1.

The process in accordance with embodiments of the invention comprises the step of dipping a glove-shaped former, or a fabric liner dressed on a former, into a coagulant solution comprising one or more of calcium nitrate, calcium chloride, sodium chloride, potassium chloride, aluminum chloride, aluminum sulfate, and like salts, or alcohols, such as methyl alcohol and ethyl alcohol, or combinations of salts and alcohols in a concentration of 2-15%, dipping the former, or liner on a former, into a polymeric, elastomeric or latex composition to form a supported or unsupported glove as discussed below. Next, the supported or unsupported glove has a weak acid having a pKa value of greater than 3.0 applied thereto, followed by the application of a strong coagulant such as an aqueous solution of calcium citrate, calcium nitrate, ethyl alcohol, methyl alcohol or any mixture thereof.

It is believed that strong coagulants acting on the outer surface layer of a polymeric, elastomeric, or latex coating promotes the fast gelling of the outer layers, thus solidifying a surface of the polymeric quickly, a type of case hardening. A solidified surface prevents a coagulant from migrating into the interior of the polymeric layer, resulting in the incomplete gelling of the interior of the polymeric layer. In other words, strong coagulants acting on the outer portion of the polymeric layer promote the fast gelling of the outer portion but incomplete gelling of the interior portion of the polymeric layer. Without intending to be bound by theory, it is believed that a weak acid migrates slowly into the interior of the polymeric, elastomeric, or latex layer, resulting in slow gelling. It has therefore been unexpectedly discovered that a weak acid promotes the gelling of the interior of the polymeric layer, resulting in a coating having more internal gelling and, therefore, a stronger, more durable, abrasion-and cut-resistant coating.

It is further believed that where the interior polymeric layer is allowed to more completely gel, the polymeric molecules, such as a nitrile rubber, get closer and, for example, the number of zinc, zinc oxide, or sulfur cross-links is increased. In other words, there is a surprising and unexpected increase in cross-link density and amount of cross-linking. It is believed that an increase in cross-linking results in a significant and unexpected increase in abrasion resistance. Furthermore, a surprising increase in cut-resistance was also observed.

In the embodiments according to the invention, the application of the weak acid is followed by the application of a strong coagulant. For example, a glove may comprise a polymeric layer formed in three phases, forming an inner polymeric layer, a middle polymeric layer, and an outer polymeric layer. Layers in this case do not indicate three separate layers in defined demarcations. Rather, the term layer is used to indicate that one portion of one entire layer is gelled, followed by the gelation of a second portion of the one entire layer, and a gelation of a third portion of the one entire layer.

An inner layer is formed by dipping, for example, a fabric liner on a former or an undressed former into a strong coagulant, such a calcium nitrate, followed by dipping the liner or former into a polymeric, elastomeric, or latex composition, forming a polymeric layer. A middle polymeric layer is gelled by dipping the coated liner or former having the polymeric layer into a weak acid solution. The outer polymeric layer is then formed by dipping the glove having the inner polymeric layer and middle polymeric layer into a strong coagulant solution, gelling the outer polymeric layer after the middle polymeric layer has gelled.

Gloves manufactured according to embodiments of the invention comprise at least one polymeric layer (an unsupported glove) or at least one polymeric layer on a fabric liner (a supported glove). Gloves having a fabric liner may be woven, non-woven, or knitted. Knitted liners comprise one or more of various yarns. In some embodiments of the invention, a knitted liner is compacted, increasing the density of the liner, by a hot washing process whereby the surface of the liner yarn is also modified to promote adhesion to a polymeric composition and increase abrasion resistance. Following the compacting step, the liner is washed and dried. Alternatively, the liner can be prepared without a compacting step.

Liners may be of the same yarn throughout, comprise different yarns in specified regions of the liner or, alternatively, comprise various blends of fibers into one yarn to impart desirable properties. Liners comprise a main yarn and/or a yarn plaited with the main yarn, which is the same as or different than the main yarn. For example, some yarns are cut resistant, fire- and/or heat- resistant, hydrophilic, hydrophobic, or flexible. Cut resistant yarns comprise, for example, ultra high molecular weight polyethylene (UHMWPE), such as DYNEEMA® or TSUNOOGA®; a meta-aramid, such as NOMEX®; or a para-aramid, such as KEVLAR® or TWARON®. Low cost elastic yarns, such as LYCRA® or SPANDEX®, may be incorporated therein.

Abrasion resistant yarns are made from a material able to withstand the effects of wear. In some embodiments of the invention, abrasion resistant yarns include materials such as fiberglass or other materials having a Mohs hardness of 3 or greater. Examples of abrasion resistant yarns include 2/70/34 textured nylon 66 filament and 2/70/34 textured nylon 6. In some embodiments of the invention, yarns comprise steel wire, glass fibers, aliphatic and aromatic nylons, aramids, SPECTRA®, VECTRAN®, and the like or any composite or blend of the fibers and materials, including cotton, rayon, polyester, polypropylene, and the like. In some embodiments, the liner may be knitted using a Knitted Variable Stitch Design (KVSD) process, as described in commonly-assigned US Patent Nos. 6,962,064; 7,213,419; 7,246,509; and 7,434,422, which are herein incorporated by reference in their entireties.

Gloves in accordance with embodiments of the invention comprise unsupported gloves and supported gloves as discussed above. For example, a polymeric glove formed directly onto a former, and having no underlying structure, is an unsupported glove. Supported gloves, which comprise a polymeric layer disposed on a fabric liner, may be coated either on the outside or inside (skin-contacting) surface with a polymeric or elastomeric composition. Unsupported and supported gloves comprise elastomeric materials, such as natural rubber latex or synthetic rubber latex, as well as other elastomeric polymer materials, for example, but not limited to, natural or synthetic polyisoprene, carboxylated or non-carboxylated acrylonitrile butadiene, nitrile, nitrile-butadiene, polychloroprene, polyvinyls, butyl latex, styrene-butadiene (SBR), styrene-butadiene latex, styrene-isoprene-styrene (SIS), styrene-ethylene/butylene-styrene (SEBS), styrene-acrylonitrile (SAN), polyethylene-propylene-diene, water- or solvent-based polyurethane, anionically stabilized polymer composition, and the like, or mixtures or blends thereof. Embodiments according to the invention further comprise dressing a liner on a former, applying an adhesive layer (such as by hot-melt spraying, dry-powder spraying, fiber-coating, and the like), such as a non-tacky thermoplastic adhesive, and placing a polymeric shell, such as a glove made by the three-dip process disclosed herein, over the liner and adhesive, creating intimate contact between the liner, adhesive, and polymeric shell, and subjecting the liner, adhesive, and shell to infrared radiation to melt the adhesive, thereby creating a bond upon cooling, as is disclosed in commonly-assigned US Patent No. 8,367,168, which is incorporated by reference in its entirety.

In at least one embodiment of the invention, the elastomeric composition comprises an aqueous latex composition, the latex comprising 100 parts per hundred (phr), stabilizers in a range from 50-70 phr, one or more surfactants in a range from 0.1 to 2.0 phr, curing agents known to those of ordinary skill in the art in a range of 2.0 to 5.0 phr, accelerators, and processing aids and colorants. One exemplary composition is indicated in Table 1, although various recipes may be employed without departing from the scope of embodiments of the present invention. In some embodiments of the invention, the nitrile latex is a carboxylated nitrile. Other compositions suitable for embodiments of the invention include any anionically stabilized polymer composition, as discussed above.

| **Table1** | |
|---|---|
| **Composition** | **Dry weight %** |
| Nitrile latex | 100 |
| Potassium Hydroxide solution | 65 |
| Sodium Lauryl Sulfate | 0.72 |
| Zinc Oxide | 3.25 |
| Sulphur | 0.5 |
| Dithiocarbamate accelerator | 0.25 |
| Bactericide | 0.25 |
| De-foamer | 0.6 |
| Color pigment | 0.3 |
| Titanium Dioxide | 0.5 |

The polymeric composition generally has a viscosity in the range of 250-5000 centipoise and has commonly used stabilizers including but not limited to potassium hydroxide, ammonia, sulfonates, and the like. The polymeric may contain other commonly used ingredients such as surfactants, anti-microbial agents, fillers/additives, and the like. In some embodiments of the invention, 2-5% fluorocarbon is added to the aqueous polymeric composition. The composition may be foamed as desired. At least one embodiment of the invention disclosed herein includes a composition having a foamed carboxylated nitrile-butadiene.

In some embodiments, the rubber, elastomeric, vulcanizate, olefin, and other polymeric composition further comprises fillers and/or reinforcements, such as silica, metallic and ceramic powders, glass-fibers, and the like to provide grip, texture, strength, and other physical properties. Such fillers and reinforcements can, for example, comprise between 2-20% of a material by weight. In other embodiments, fillers and reinforcements may comprise between 20-50% by weight for various applications tailored to end properties. Other additives are added as needed, such as for flame-, heat-, and arc-retardance, adhesion promoters, ultraviolet stabilization, hardness, pigments, and the like.

In some embodiments of the invention, the polymeric layer is foamed using air cells dispersed in the range of 5-50 volumetric percentage forming closed cells or open cells as is described in commonly-assigned US Patent Nos. 8,192,834, 8,001,809, and 7,814,571. In some embodiments of the invention, the cells are interconnected in the polymeric layer. Closed cells provide a moisture proof polymeric latex coating that is highly flexible, soft and spongy, and provides good dry and wet grip. Closed cells, generally, have air content ranging from 5-15 volumetric percent. Open cells, which are interconnected, generally range from approximately 15-50 volumetric percentage range and provide a breathable glove through the foamed polymeric latex layer. This foamed polymeric layer may penetrate half or more of the thickness of the knitted liner, though the polymeric layer does not penetrate the entire thickness, thereby substantially avoiding strike-through, i.e., skin contact with the polymeric coating while donning the glove.

The polymeric composition may contain additional surfactants such as TWEEN® 20 to stabilize the latex foam. Once the composition is foamed with appropriate air content and the viscosity is adjusted, refinement of the foam is undertaken by using an impeller at a suitable speed as is known to those in the art. Air bubble size may be refined using a different impeller at a reduced speed. The foamed polymeric composition generally has a higher viscosity and is therefore more difficult to penetrate the interstices between the yarns in the knitted liner and may require a higher depth of immersion of the former with the knitted liner. The foamed composition gels due to the action of the coagulant resident on the surfaces of the yarns forming chocking regions between the fibers, preventing further entry of the foamed latex emulsion into the knitted liner, thus preventing strike-through. The composition, irrespective of whether foamed, may be applied by dipping a former, or a former having a knitted liner dressed thereon, into a composition or spraying the composition onto the liner or, for unsupported gloves, dipping the former directly into the composition or spraying the former with the composition.

The coagulant solution, which destabilizes and coagulates a polymeric, elastomeric, or latex composition, comprises one or more of calcium nitrate, calcium chloride, sodium chloride, potassium chloride, aluminum chloride, aluminum sulfate, and like salts, or alcohols, such as methyl alcohol and ethyl alcohol, or combinations of salts and alcohols. These coagulants are highly soluble in water. Also, water-based, polymeric, coagulant coatings, for coating the former, capable of producing a thickness in the range of about 5 to 50 micrometers on a former, may be used in embodiments of the invention. The polymeric coagulant coating solution possesses adequate former surface-wetting properties and sufficient viscosity or rheology characteristics so as to form a thin layer of polymeric coating. This is accomplished by, optionally, adding wetting agents and viscosity modifiers to the composition solution as known to those of ordinary skill in the art.

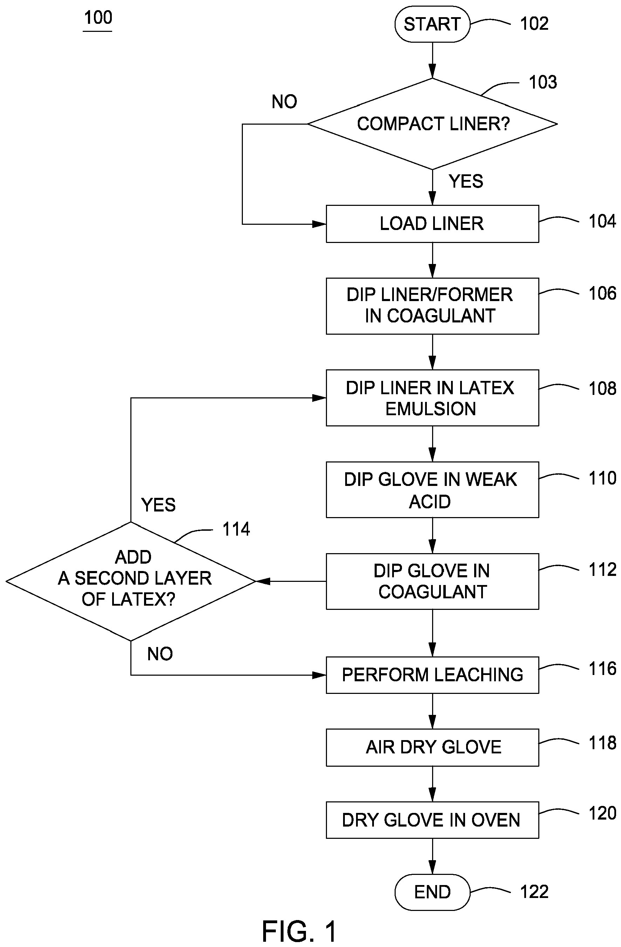

Figure 1 depicts a flow diagram of a method 100 for producing a glove in accordance with one or more embodiments of the invention. In some embodiments, each and every step of the method 100 is performed. In other embodiments, some steps are omitted or skipped. Method 100 starts at process step 102 and proceeds to step 103. If a supported glove is being produced, a liner is provided on a former as discussed above. At step 103, if a liner is present, the liner may be either a compacted or an uncompacted liner. Compacting, which may be performed separately or optionally, shrinks the liner, thereby increasing the density of the knitted structure. For example, compacting a liner may be achieved by applying a wetting agent to the liner, heating the liner at a first temperature, and drying the liner at a second temperature. In one exemplary embodiment, the wetting agent is a 28.5% aqueous solution of polyoxyethylene ether, such as A-113, manufactured by Suzhou Liansheng Chemistry Co., Ltd. The liner is soaked with the wetting agent, heated in, for instance, an oven at 60°C for approximately 100-120 minutes and subsequently dried at approximately 70°C for 50-70 minutes.

At process step 104, a former is provided or a liner is loaded onto a former. In some embodiments, the former, which may be made of a ceramic, is heated before the dipping step. At process step 106, the former is dipped into a tank having a coagulant, which may be heated to 50-60°C. In one exemplary embodiment of the invention, the coagulant is an aqueous solution of 3.5 to 8% calcium nitrate concentration. The liner may be dipped in one of several ways, such as a full-dip, a % dip, a knuckle-dip, palm-dip or the like, as is discussed herein and as disclosed in commonly-assigned US Patent Application Serial No. 12/769,829. In some embodiments of the invention, the former at step 106 is dipped into the coagulant, as discussed above, and without a liner, which, when the rest of the method 100 is performed, forms an unsupported abrasion and cut resistant glove. At process step 108, the former is removed from the tank, dried for approximately 1-5 minutes at, for example, 30-60°C, and dipped into a tank having a latex composition, as described above.

At process step 110, the former having an elastomeric, polymeric, or latex layer (disposed on either the former itself or on a fabric liner) disposed thereon is dipped into a tank having a weak acid for a few seconds to several minutes. A weak acid is defined herein as an acid that does not completely dissociate in an aqueous solution. Generally, an acid having a pKa value of greater than 3.0, such as acetic, trichloroacetic, formic, oxalic, hydrofluoric, citric, isocitric, boric, and trimesic acids are weak acids. In some embodiments of the invention, the weak acid is an aqueous solution of tricarboxylic acid (TCA) of approximately 0.1-1.0% and, optionally, a surfactant, such as 0.05% nonyl phenoxypolyethanol or IGEPAL CO630, manufactured by Rhodia Consumer Specialties. The elastomeric or polymeric layer may be dipped in the TCA, for example, for 2 to 10 seconds.

At process step 112, the glove is dipped into a strong coagulant such as an aqueous solution of calcium citrate, calcium nitrate, ethyl alcohol, methyl alcohol or any mixture thereof or other coagulant salts as are known by those in the art. In some embodiments, the strong coagulant is an 8-12% concentration of calcium citrate, in which the glove is dipped for two to approximately eight seconds and removed. At process step 114, it is determined whether to add a second polymeric layer onto the glove. If the answer is yes, method 100 returns to step 108. Also, the second polymeric layer may be foamed or unfoamed, irrespective of whether the first layer is foamed or unfoamed, and vice versa. If no second layer is to be added, method 100 proceeds to process step 116.

At step 116, the glove is leached of impurities and proteins, for example, 35-50°C for approximately 1-3 minutes. At process step 118, the glove is allowed to dry in air or with blown air for approximately 30 minutes. At process step 120, the glove is delivered to an oven for drying and curing, for example, at 70-120°C for 30 to 40 minutes. In some exemplary embodiments, the gloves are dried and cured in one zone of an oven at 70°C for twenty-five minutes, a second zone at 110°C for twenty-five minutes, and in a third zone of an oven at 115 °C for twenty-five minutes. At process step 122, method 100 ends.

In at least one embodiment of the invention of method 100, a knitted liner, for example, a 15- or 18-gauge liner, having a denier ranging from, for example, 70-400, is knitted using a combination of nylon 66 and SPANDEX® yarns, is dressed on a hand shaped ceramic or metallic former and is immersed in a 2-15 wt% calcium nitrate aqueous coagulant solution. The penetration and gelling action of the polymeric, elastomeric, or latex composition is sensitive to the viscosity of the polymeric composition and the depth to which the former with the coagulant coated liner is depressed into the composition tank. The higher the hydrostatic pressure, i.e., the deeper the glove on the former is immersed into the tank, the composition penetrates more into the knitted liner.

In some exemplary embodiments of the invention, a glove comprises an 18-gauge liner knitted from nylon 6 and SPANDEX® yarns, having a foamed carboxylated nitrile coating disposed thereon, which we have surprisingly found to achieve an abrasion level of 4 or greater, a puncture level of 1, a cut resistance level of 1, and a tear level of 2. In another exemplary embodiment of the invention, a glove comprises a 15-gauge liner knitted from nylon 6 and SPANDEX® yarns, and having a foamed carboxylated nitrile coating disposed thereon, providing an abrasion level of 4 or greater, a cut level of 2, a puncture level of 1, and a tear level of 3.

When the immersion depth is shallow and the viscosity of the polymeric composition is high, the polymeric composition minimally penetrates the knitted liner potentially resulting in poor adhesion of the polymeric composition. Therefore, two controllable process variables are available for reliably controlling the penetration of the polymeric composition into the knitted liner, even when the knitted liner is relatively thin. These process variables are, namely, 1) the control of polymeric, elastomeric, or latex composition viscosity and 2) depth of immersion of the knitted liner dressed former. The depth of immersion needed to achieve this aqueous polymeric composition to a depth greater than half the thickness of the knitted liner but less than the entire thickness is 0.2 to 5cm, and is a function of the viscosity of the composition. In some exemplary embodiments, the thickness of the elastomeric, polymeric, or latex layer is approximately 0.1mm to 0.3mm.

Because a polymeric coating of the glove is generally provided on the palm and finger areas of the glove, the former is articulated using a mechanism that moves the former in and out of the composition, immersing various portions of the knitted liner on the former to progressively varying depths. As a result, some portions of the glove may have some degree of polymeric layer penetration, however, more than 75% of the knitted liner is penetrated at least half way or more than halfway without showing latex stain on the skin-contacting surface of the glove. Gloves may be washed and subsequently heated to vulcanize the latex composition and washed again to remove coagulant salts and other processing chemicals used to stabilize and control the viscosity and wetting characteristics of the composition.

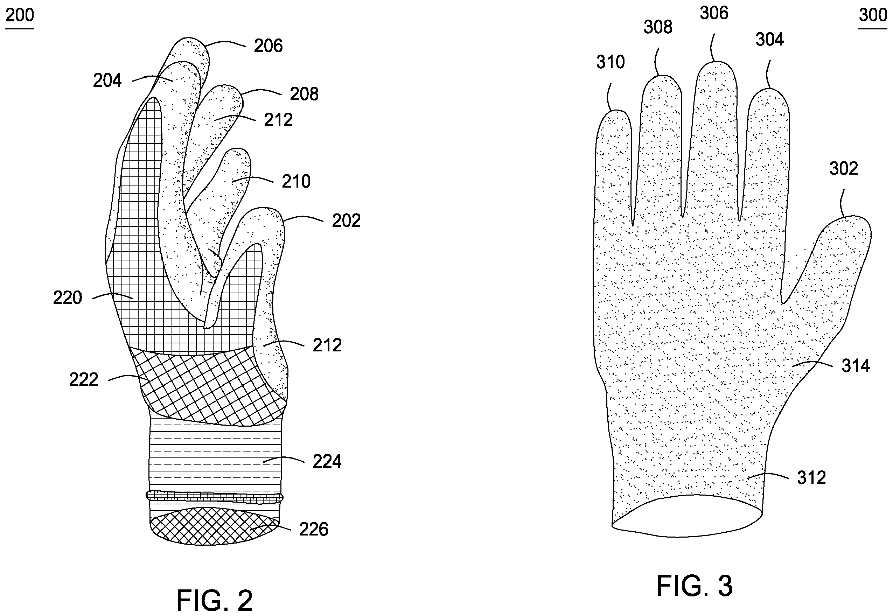

Figure 2 depicts a perspective view of a left-handed, supported palm-dipped glove in accordance with embodiments of the invention. Glove 200 comprises liner 220, and thumb 202 and fingers 204, 206, 208, and 210, and optionally comprises cuff 224. The coating on liner 200 may comprise a palm dip (as shown), knuckle dip (in which coating is disposed on a portion of the back of the hand), finger dip (in which coating is disposed only on the thumb and fingertips), three-quarters dip (in which coating is disposed on the palm and fingers and knuckles, though the backhand area 222 is uncoated), full dip (in which the entire liner 200 is coated), and the like as needed for specific applications using the dip processes as described in commonly assigned US Patent No. 7,814,571. FIG. 2 shows glove 200 having a palm dip in which the palm is totally covered with an elastomeric coating 212. The palm side of fingers 202, 204, 206, 208, and 210 are covered. Coating 212 partially covers the backside of fingers, while the upper back hand side 220 and lower backhand side 222 of a left hand glove 200 is uncoated, leaving the liner 220 partially exposed. The inside 226 of liner 200 is left uncoated.

Figure 3 depicts a perspective view of a left-handed, unsupported dipped glove in accordance with embodiments of the invention. Glove 300 comprises thumb 302 and fingers 304, 306, 308, and 310, and cuff ring 312. Glove 300 is comprised of coating 314 as manufactured in accordance with embodiments of the invention as discussed above. Unsupported gloves have no liner, though otherwise the unsupported glove is manufactured substantially similarly as described above.

Gloves in accordance with embodiments of the invention have achieved unexpectedly higher levels of durability and wear resistance. For example, a glove having a nylon and SPANDEX® knitted liner and a nitrile coating disposed thereon (in accordance with embodiments of the present invention) was compared with a glove having a similar knitted liner and nitrile coating. Each was subjected to an EN 388 Martindale Abrasion testing protocol. Supported gloves in accordance with embodiments of the present invention averaged 25,248 abrasion cycles before failure of the coating. Failure here is defined as the coating being essentially removed and substantially exposing the liner. The liner of the glove was not visible until more than 6000 cycles had passed. In contrast, a similar glove, without the benefit of the more fully gelled interior coating of the present invention, showed a loss of coating, so that the liner became visible, after only 100 abrasion cycles.

Tables 2 and 3 show the abrasion results of a Taber testing protocol using a 1000 gram weight for gloves in accordance with embodiments of the present invention and a glove, without using a weak acid gelation, having a similar knitted nylon liner and nitrile coating, respectively. Gloves in accordance with embodiments of the invention attained much greater abrasion resistance. Specifically, the percentage of mass loss of coating on the glove was roughly equal at 40,000 revolutions for gloves in accordance with the present invention versus only 2500 revolutions for the non-weak acid gelation glove (conventional process). In other words, gloves in accordance with the present invention performed 16 times better than a glove manufactured using a conventional process.

| Table 2: Mass loss percentage of coating Gloves in accordance with embodiments of the invention | |
|---|---|
| 100 Revs | 0.0% |
| 250 Revs | 0.2% |
| 500 Revs | 0.43% |
| 1000 Revs | 0.7% |
| 2500 Revs | 1.2% |
| 7500 Revs | 2.0% |
| 40000 revs | 14% |

| Table 3: Mass loss percentage of coating Glove without using weak acid gelation | |
|---|---|
| 100 Revs | 0.6% |
| 250 Revs | 1.7% |
| 500 Revs | 3.1% |
| 1000 Revs | 5.3% |
| 2500 Revs | 13.5% |
| 5000 Revs | 26.6% |
| 6200 Revs | 35% |

Tables 4 and 5 show the abrasion results of a Taber testing protocol using a 500 gram weight for gloves in accordance with embodiments of the present invention and a glove, without using a weak acid gelation, having a similar knitted nylon liner and nitrile coating, respectively. Gloves in accordance with embodiments of the invention again attained much greater abrasion resistance. Specifically, the glove in accordance with the present invention lost 3.1% of its mass after 25,000 revolutions of the abrader while the non-weak acid gelation glove lost 38.0%. In other words, gloves in accordance with the present invention performed approximately 13 times better after 25,000 revolutions.

| Table 4: Mass loss percentage of coating Gloves in accordance with embodiments of the invention | |
|---|---|
| 500 Revs | 0.3% |
| 1000 Revs | 0.8% |
| 5000 Revs | 1.5% |
| 10000 Revs | 1.7% |
| 20000 Revs | 2.6% |
| 25000 Revs | 3.1% |
| 40,000 revs | 4.4% |

| Table 5: Mass loss percentage of coating Glove without using weak acid gelation | |
|---|---|
| 500 Revs | 1.4% |
| 1000 Revs | 2.3% |
| 5000 Revs | 7.8% |
| 10000 Revs | 14.5% |
| 20000 Revs | 29.1% |
| 25000 Revs | 38.0% |
| 26800 Revs | 44.0% |

Furthermore, an industry standard glove (conventional glove) is a 15 gauge knitted nylon liner having a coating disposed thereon, which has a cut level resistance of 1. The same liner having a coating in accordance with embodiments of the present invention provides a glove having a cut level resistance of 2.

Although a few exemplary embodiments of the invention have been described in detail above, those skilled in the art will appreciate that many modifications are possible in embodiments without materially departing from the teachings disclosed herein. Any and all such modifications are intended to be included within the embodiments of the invention, and other embodiments may be devised without departing from the scope thereof, and the scope thereof is determined by the following claims.

The use of the terms "a" and "an" and "the" and other referents describing embodiments of the invention are to be construed both in the singular and plural unless otherwise indicated or clearly contradicted by context. Ranges of values herein are merely intended to serve as a shorthand method of referring to each separate value falling within the range; unless otherwise indicated herein, and each range value is incorporated into the specification as if individually recited herein. All methods described herein can be performed in any suitable order unless otherwise indicated herein or clearly contradicted by context. The use of any and all examples, or exemplary language (e.g., "such as") provided herein, is intended merely to better illustrate the invention and does not pose a limitation on the scope of the invention unless otherwise claimed. No language in the specification should be construed as indicating any non-claimed element as essential to the practice of the invention.

## Claims

1. An abrasion and cut resistant glove, comprising:
a coating, the coating comprising a polymeric, elastomeric, or latex composition, wherein the coating has an EN 388 abrasion level of 4 or greater,
**characterized in that** the coating comprises an inner layer, a middle layer and an outer layer obtainable by
applying a strong coagulant solution comprising one or more of calcium nitrate, calcium chloride, sodium chloride, potassium chloride, aluminum chloride, aluminum sulfate, and like salts, or alcohols, such as methyl alcohol and ethyl alcohol, or combinations of salts and alcohols in a concentration of 2-15% to a glove-shaped former and/or liner
- applying a polymeric, elastomeric or latex composition to the former, thereby disposing a coating onto the former and/or liner
- dipping the former having a coating thereon into a weak acid having a pKa value of greater than 3.0; and
- dipping the polymeric layer into a strong coagulant such as an aqueous solution of calcium citrate, calcium nitrate, ethyl alcohol, methyl alcohol or mixture thereof.

2. The abrasion and cut resistant glove of claim 1 further comprising a knitted nylon liner, the knitted nylon liner being a 15 or 18 gauge liner.

3. The abrasion and cut resistant glove of claim 2 wherein the knitted nylon liner comprises a nylon 6 or nylon 66 yarn or blends thereof.

4. The abrasion and cut resistant glove of claim 3, wherein the abrasion and cut resistant glove has at least one of an EN 388 abrasion level of 4 or greater or an EN 388 cut resistance level of 2.

5. The abrasion and cut resistant glove of claim 1, wherein the coating is foamed.

6. The abrasion and cut resistant glove of claim 1 wherein the thickness of the coating is between 0.1 and 0.3 mm.

7. The abrasion and cut resistant glove of claim 2 wherein the polymeric, elastomeric, or latex composition further comprises at least one of natural polyisoprene, synthetic polyisoprene, carboxylated acrylonitrile butadiene, non-carboxylated acrylonitrile butadiene, nitrile-butadiene, polychloroprene, polyvinyls, butyl latex, styrene-butadiene (SBR), styrene-butadiene latex, styrene-isoprene-styrene (SIS), styrene-ethylene/butylene-styrene (SEBS), styrene-acrylonitrile (SAN), polyethylene-propylene-diene, water-based polyurethane, an anionically stabilized polymer composition, solvent-based polyurethane, or combinations or blends thereof.

8. The abrasion and cut resistant glove of claim 1 wherein the abrasion and cut resistant glove withstands greater than 10,000 revolutions in a Taber abrasion tester without failing or exhibiting coating peel off from the liner.

9. The abrasion and cut resistant glove of claim 1 wherein the glove is capable of withstanding greater than 20000 revolutions in a Martindale abrasion tester without coating failure or substantially exposing the liner.

10. A method for making an abrasion and cut resistant glove, comprising:
applying a strong coagulant solution comprising one or more of calcium nitrate, calcium chloride, sodium chloride, potassium chloride, aluminum chloride, aluminum sulfate, and like salts, or alcohols, such as methyl alcohol and ethyl alcohol, or combinations of salts and alcohols in a concentration of 2-15% to a glove-shaped former;
applying a polymeric, elastomeric or latex composition to the former, thereby disposing a coating onto the former and/or liner;
dipping the former having a coating thereon into a weak acid having a pKa value of greater than 3.0; and
dipping the polymeric layer into a strong coagulant.

11. The method of claim 10, wherein the polymeric composition is foamed.

12. The method of claim 10, wherein the weak acid comprises at least one tricarboxylic acid, formic acid, or acetic acid.

13. The method of claim 10, wherein the polymeric composition further comprises at least one of natural polyisoprene, synthetic polyisoprene, carboxylated acrylonitrile butadiene, non-carboxylated acrylonitrile butadiene, nitrile-butadiene, polychloroprene, polyvinyls, butyl latex, styrene-butadiene (SBR), styrene-butadiene latex, styrene-isoprene-styrene (SIS), styrene-ethylene/butylene-styrene (SEBS), styrene-acrylonitrile (SAN), polyethylene-propylene-diene, water-based polyurethane, an anionically stabilized polymer composition, solvent-based polyurethane, or combinations or blends thereof.

14. The method of claim 10 further comprising dressing the former with a fabric liner before applying a strong coagulant.

15. The method of claim 14 further comprising compacting the fabric liner.

16. The abrasion and cut resistant glove of claim 1 or the method for making an abrasion and cut resistant glove of claim 10, wherein the weak acid is an acetic, trichloroacetic, formic, oxalic, hydrofluoric, citric, isocitric, boric, and trimesic acids, and/or tricarboxylic acid.

## Patentansprüche

1. Abrieb- und schnittbeständiger Handschuh, Folgendes umfassend:
eine Beschichtung, wobei die Beschichtung eine Polymer-, Elastomer- oder Latexzusammensetzung umfasst, wobei die Beschichtung eine EN 388-Abriebstufe von 4 oder mehr hat,
**dadurch gekennzeichnet, dass** die Beschichtung eine Innenschicht, eine Mittelschicht und eine Außenschicht umfasst, die erhalten werden können, indem
eine starke Koagulationsmittellösung, die einen oder mehrere der folgenden Stoffe Calciumnitrat, Calciumchlorid, Natriumchlorid, Kaliumchlorid, Aluminiumchlorid, Aluminiumsulfat und ähnliche Salze, oder Alkohole, wie etwa Methylalkohol und Ethylalkohol, umfasst, oder Kombinationen aus Salzen und Alkoholen in einer Konzentration von 2 bis 15 % auf einen handschuhförmigen Formgeber und/oder Einsatz aufgetragen wird,
- Auftragen einer Polymer-, Elastomer- oder Latexzusammensetzung auf den Formgeber, wodurch eine Beschichtung auf dem Formgeber und/oder Einsatz angeordnet wird,
- Eintauchen des Formgebers mit der darauf befindlichen Beschichtung in eine schwache Säure, die einen pKa-Wert von über 3,0 hat; und
- Eintauchen der Polymerschicht in ein starkes Koagulationsmittel, wie etwa eine wässrige Lösung aus Calciumcitrat, Calciumnitrat, Ethylalkohol, Methylalkohol oder ein Gemisch aus diesen.

2. Abrieb- und schnittbeständiger Handschuh nach Anspruch 1, darüber hinaus einen gestrickten Nyloneinsatz umfassend, wobei es sich bei dem gestrickten Nyloneinsatz um einen Einsatz mit einer Feinheitszahl 15 oder 18 handelt.

3. Abrieb- und schnittbeständiger Handschuh nach Anspruch 2, wobei der gestrickte Nyloneinsatz ein Nylon 6- oder Nylon 66-Garn oder Mischungen von diesen umfasst.

4. Abrieb- und schnittbeständiger Handschuh nach Anspruch 3, wobei der abrieb- und schnittbeständige Handschuh eine EN 388-Abriebstufe von 4 oder höher und/oder eine EN 388-Schnittfestigkeitsstufe von 2 hat.

5. Abrieb- und schnittbeständiger Handschuh nach Anspruch 1, wobei die Beschichtung aufgeschäumt ist.

6. Abrieb- und schnittbeständiger Handschuh nach Anspruch 1, wobei die Dicke der Beschichtung zwischen 0,1 und 0,3 mm beträgt.

7. Abrieb- und schnittbeständiger Handschuh nach Anspruch 2, wobei die Polymer-, Elastomer- oder Latexzusammensetzung darüber hinaus mindestens einen der folgenden Stoffe natürliches Polyisopren, synthetisches Polyisopren, carboxyliertes Acrylnitril-Butadien, nicht carboxyliertes Acrylnitril-Butadien, Nitril-Butadien, Polychloropren, Polyvinyle, Butyllatex, Styrol-Butadien (SBR), Styrol-Butadien-Latex, Styrol-Isopren-Styrol (SIS), Styrol-Ethylen/Butylen-Styrol (SEBS), Styrol-Acrylnitril (SAN), Polyethylen-Polypropylen-Dien, Polyurethan auf Wasserbasis, eine anionisch stabilisierte Polymerzusammensetzung, Polyurethan auf Lösungsmittelbasis, oder Kombinationen oder Mischungen aus diesen umfasst.

8. Abrieb- und schnittbeständiger Handschuh nach Anspruch 1, wobei der abrieb- und schnittbeständige Handschuh, ohne zu versagen oder eine Beschichtungsablösung vom Einsatz aufzuweisen, mehr als 10.000 Umdrehungen in einer Taber-Abriebuntersuchungsvorrichtung standhält.

9. Abrieb- und schnittbeständiger Handschuh nach Anspruch 1, wobei der Handschuh in der Lage ist, ohne Beschichtungsausfall oder wesentliches Freilegen des Einsatzes, mehr als 20.000 Umdrehungen in einer Martindale-Abriebuntersuchungsvorrichtung standzuhalten.

10. Verfahren zum Herstellen eines abrieb- und schnittbeständigen Handschuhs, Folgendes umfassend:
Auftragen einer starken Koagulationsmittellösung, die einen oder mehrere der folgenden Stoffe Calciumnitrat, Calciumchlorid, Natriumchlorid, Kaliumchlorid, Aluminiumchlorid, Aluminiumsulfat und ähnliche Salze, oder Alkohole, wie etwa Methylalkohol und Ethylalkohol, umfasst, oder Kombinationen aus Salzen und Alkoholen in einer Konzentration von 2 bis 15 % auf einen handschuhförmigen Formgeber;
Auftragen einer Polymer-, Elastomer- oder Latexzusammensetzung auf den Formgeber, wodurch eine Beschichtung auf dem Formgeber und/oder Einsatz angeordnet wird;
Eintauchen des Formgebers mit der darauf befindlichen Beschichtung in eine schwache Säure, die einen pKa-Wert von über 3,0 hat; und
Eintauchen der Polymerschicht in ein starkes Koagulationsmittel.

11. Verfahren nach Anspruch 10, wobei die Polymerzusammensetzung aufgeschäumt wird.

12. Verfahren nach Anspruch 10, wobei die schwache Säure mindestens einen der Stoffe Tricarboxylsäure, Ameisensäure oder Ethansäure umfasst.

13. Verfahren nach Anspruch 10, wobei die Polymerzusammensetzung darüber hinaus mindestens einen der folgenden Stoffe natürliches Polyisopren, synthetisches Polyisopren, carboxyliertes Acrylnitril-Butadien, nicht carboxyliertes Acrylnitril-Butadien, Nitril-Butadien, Polychloropren, Polyvinyle, Butyllatex, Styrol-Butadien (SBR), Styrol-Butadien-Latex, Styrol-Isopren-Styrol (SIS), Styrol-Ethylen/Butylen-Styrol (SEBS), Styrol-Acrylnitril (SAN), Polyethylen-Polypropylen-Dien, Polyurethan auf Wasserbasis, eine anionisch stabilisierte Polymerzusammensetzung, Polyurethan auf Lösungsmittelbasis, oder Kombinationen oder Mischungen aus diesen umfasst.

14. Verfahren nach Anspruch 10, darüber hinaus umfassend, den Formgeber mit einem Gewebeeinsatz zu belegen, bevor ein starkes Koagulationsmittel aufgetragen wird.

15. Verfahren nach Anspruch 14, darüber hinaus umfassend, den Gewebeeinsatz zu verdichten.

16. Abrieb- und schnittbeständiger Handschuh nach Anspruch 1 oder Verfahren zum Herstellen eines abrieb- und schnittbeständigen Handschuhs nach Anspruch 10, wobei es sich bei der schwachen Säure um eine Ethan-, Trichlorethan-, Ameisen-, Oxal-, Hydrofluor-, Zitronen-, Isozitronen-, Bor- und Trimesinsäure und/oder Tricarbonsäure handelt.

## Revendications

1. Gant résistant à l'abrasion et aux coupures, comprenant :
un revêtement, le revêtement comprenant une composition polymère, élastomère, ou latex, sachant que le revêtement a un niveau d'abrasion EN 388 de 4 ou plus,
**caractérisé en ce que** le revêtement comprend une couche intérieure, une couche médiane et une couche extérieure pouvant s'obtenir par
application d'une solution de coagulant fort comprenant une ou plusieurs substances parmi du nitrate de calcium, du chlorure de calcium, du chlorure de sodium, du chlorure de potassium, du chlorure d'aluminium, du sulfate d'aluminium, et comme des sels, ou alcools, tels que de l'alcool de méthyle ou de l'alcool d'éthyle, ou des combinaisons de sels et d'alcools dans une concentration de 2 à 15 % à un moule et/ou une doublure en forme de gant,
- application d'une composition polymère, élastomère ou latex au moule, disposant ainsi un revêtement sur le moule et/ou la doublure,
- plongée du moule ayant le revêtement sur celui-ci dans un acide faible ayant une valeur pKa supérieure à 3,0 ; et
- plongée de la couche polymère dans un coagulant fort tel qu'une solution aqueuse de citrate de calcium, de nitrate de calcium, d'alcool d'éthyle, d'alcool de méthyle ou d'un mélange de ceux-ci.

2. Le gant résistant à l'abrasion et aux coupures de la revendication 1, comprenant en outre une doublure de nylon tricoté, la doublure de nylon tricoté étant une doublure de calibre 15 ou 18.

3. Le gant résistant à l'abrasion et aux coupures de la revendication 2, sachant que la doublure de nylon tricoté comprend un fil de nylon de 6 ou de nylon 66 ou des mélanges de ceux-ci.

4. Le gant résistant à l'abrasion et aux coupures de la revendication 3, sachant que le gant résistant à l'abrasion et aux coupures a au moins l'un d'un niveau d'abrasion EN 388 de 4 ou supérieur ou d'un niveau de résistance aux coupures EN 388 de 2.

5. Le gant résistant à l'abrasion et aux coupures de la revendication 1, sachant que le revêtement est expansé.

6. Le gant résistant à l'abrasion et aux coupures de la revendication 1, sachant que l'épaisseur du revêtement est comprise entre 0,1 et 0,3 mm.

7. Le gant résistant à l'abrasion et aux coupures de la revendication 2, sachant que la composition polymère, élastomère, ou latex comprend en outre au moins une substance parmi du polyisoprène naturel, du polyisoprène synthétique, du butadiène d'acrylonitrile carboxylé, du butadiène d'acrylonitrile non carboxylé, du nitrile-butadiène, du polychloroprène, des polyvinyles, du latex de butyle, du styrène-butadiène (SBR), du latex de styrène-butadiène, du styrène-isoprène-styrène (SIS), du styrène-éthylène/butylène-styrène (SEBS), du styrène-acrylonitrile (SAN), du polyéthylène-propylène-diène, du polyuréthane à base d'eau, une composition polymère anioniquement stabilisée, du polyuréthane à base de solvant, ou des combinaisons ou mélanges de ceux-ci.

8. Le gant résistant à l'abrasion et aux coupures de la revendication 1, sachant que le gant résistant à l'abrasion et aux coupures résiste à plus de 10 000 tours dans un abrasimètre Taber sans présenter de défaut ni de décollement du revêtement par rapport à la doublure.

9. Le gant résistant à l'abrasion et aux coupures de la revendication 1, sachant que le gant est capable de résister à plus de 20 000 tours dans un abrasimètre Martindale sans défaut de revêtement ni d'exposition sensible de la doublure.

10. Procédé de fabrication d'un gant résistant à l'abrasion et aux coupures, comprenant :
l'application d'une solution de coagulant fort comprenant une ou plusieurs substances parmi du nitrate de calcium, du chlorure de calcium, du chlorure de sodium, du chlorure de potassium, du chlorure d'aluminium, du sulfate d'aluminium, et comme des sels, ou alcools, tels que de l'alcool de méthyle ou de l'alcool d'éthyle, ou des combinaisons de sels et d'alcools dans une concentration de 2 à 15 % à un moule en forme de gant ;
l'application d'une composition polymère, élastomère ou latex au moule, disposant ainsi un revêtement sur le moule et/ou la doublure ;
la plongée du moule ayant le revêtement sur celui-ci dans un acide faible ayant une valeur pKa supérieure à 3,0 ; et
la plongée de la couche polymère dans un coagulant fort.

11. Le procédé de la revendication 10, sachant que la composition polymère est expansée.

12. Le procédé de la revendication 10, sachant que l'acide faible comprend au moins un acide tricarboxylique, un acide formique ou un acide acétique.

13. Le procédé de la revendication 10, sachant que la composition polymère comprend en outre au moins une substance parmi du polyisoprène naturel, du polyisoprène synthétique, du butadiène d'acrylonitrile carboxylé, du butadiène d'acrylonitrile non carboxylé, du nitrile-butadiène, du polychloroprène, des polyvinyles, du latex de butyle, du styrène-butadiène (SBR), du latex de styrène-butadiène, du styrène-isoprène-styrène (SIS), du styrène-éthylène/butylène-styrène (SEBS), du styrène-acrylonitrile (SAN), du polyéthylène-propylène-diène, du polyuréthane à base d'eau, une composition polymère anioniquement stabilisée, du polyuréthane à base de solvant, ou des combinaisons ou mélanges de ceux-ci.

14. Le procédé de la revendication 10, comprenant en outre le garnissage du moule avec une doublure de tissu avant application d'un coagulant fort.

15. Le procédé de la revendication 14, comprenant en outre le compactage de la doublure de tissu.

16. Le gant résistant à l'abrasion ou aux coupures de la revendication 1 ou le procédé de fabrication d'un gant résistant à l'abrasion et aux coupures de la revendication 10, sachant que l'acide faible est un acide acétique, trichloroacétique, formique, oxalique, hydrofluorique, citrique, isocitrique, borique, et trimésique, et/ou un acide tricarboxylique.
